Europäisches Patentamt

European Patent Office

Office européen des brevets

(11) Publication number: **0 060 589**
A1

# EUROPEAN PATENT APPLICATION

(21) Application number: 82200268.9

(22) Date of filing: 02.03.82

(51) Int. Cl.³: **A 01 N 37/02**

(30) Priority: 09.03.81 NL 8101118

(43) Date of publication of application: 22.09.82
Bulletin 82/38

(84) Designated Contracting States: **AT BE CH DE FR GB IT LI LU NL SE**

(71) Applicant: **NEDERLANDSE CENTRALE ORGANISATIE VOOR TOEGEPAST-NATUURWETENSCHAPPELIJK ONDERZOEK, Juliana van Stolberglaan 148, NL-2595 CL The Hague (NL)**

(72) Inventor: **Persoons, Cornelis Jacobus, Schimmelpenninck v.d. Oyeweg 31, NL-2645 NB Delfgauw (NL)**
Inventor: **Voerman, Simon, Hamsterlaan 8, NL-6705 CT Wageningen (NL)**

(74) Representative: **van der Beek, George Frans et al, Nederlandsch Octroolbureau Johan de Wittlaan 15 P.O. Box 29720, NL-2502 LS Den Haag (NL)**

(54) **Attractant for the beet armyworm moth.**

(57) The invention relates to an attractant for the beet armyworm moth (Spodoptera exigua) wholly or partially consisting of a mixture of at least two compounds selected from the group of
(a) cis-9-tetradecenyl acetate
(b) cis-11-tetradecenyl acetate
(c) cis-9,trans-12-tetradecadienyl acetate
(d) cis-9,cis-12-tetradecadienyl acetate, and
(e) tetradecyl acetate,
with the exception of mixtures of compound (a) with compound (b) and of compound (a) with compound (c).
Further, the invention relates to an attractant composition consisting of one of the abovementioned attractant mixtures combined with a carrier, as well as to an insect trap provided with one of the abovementioned attractant mixtures or with an attractant composition. Also, the invention relates to a process for controlling the beet armyworm moth in which the abovementioned attractants or attractant compositions are used.

ACTORUM AG

Attractant for the beet armyworm moth.

The present invention relates to an attractant for the beet armyworm moth (Spodoptera exigua), to a composition for attracting the male beet armyworm moth, to an insect trap and to a process for controlling the beet armyworm moth. Effective control of the beet armyworm moth is highly desirable as the caterpillar of this insect causes severe damage to a great variety of cultural crops in tropical and subtropical areas.

It was found that the sex pheromone of the female beet armyworm moth contains the following compounds:

(a) cis-9-tetradecenyl acetate

(b) cis-11-tetradecenyl acetate

(c) cis-9, trans-12-tetradecadienyl acetate

(d) cis-9, cis-12-tetradecadienyl acetate, and

(e) tetradecyl acetate.

Among the abovementioned compounds compound (c), the cis-9,trans-12-tetradecadienyl acetate is known as a component of the sex pheromone of Spodoptera exigua. See: Ann. Entomol. Soc. Am. 65, 398 ( 1972). Compound (a), the cis-9-tetradecenyl acetate is known as a component of the pheromone of the fall armyworm moth, Spodoptera frugiperda ( J.E. Smith); see J. Econ. Entomol. 60 (5), page 1270 ( 1967). A mixture of compound (a) with compound (c) is the pheromone of the Southern Armyworm Moth, Prodenia (= Spodoptera) eridania (Cramer); see Science 170, pages 542-543 (1970).

However, in field tests with a Spodoptera exigua neither the separate compounds (a) and (c) , neither mixtures of (a) and (c) [in ratios varying from 100% (a) to 100% (c)] showed any attracting activity for the male beet armyworm moth. See: J. Econ. Entomol. 69 , Nr. 3, pages 324-326 ( 1976).

Compound (b), the cis-11-tetradecenyl acetate is known as a component of the pheromone of the red-banded leaf roller moth [Argyrotaenia velutinana ( Walker)] , see Nature 219 ( 1968), page 513. This compound is also known from J. Econ. Ent. 63, Nr. 3 (1970), page 779 as a component of the pheromone of the European corn borer, Ostrinia nubilalis (Hübner) .

Compound (d), the cis-9,cis-12-tetradecadienyl acetate has been synthesized by Fukami and coworkers; see F. Matsamura,G.M. Boush and T.Misato: Environmental Toxicology of Pesticides, page 571, Academic Press, New York (1972).

Further, Dutch patent application 7205229 and Science 175 (1972), 1469-70 disclose the pheromone of the summer fruit tortrix Adoxophyes orana as a mixture of cis-9-tetradecenyl acetate (a) and cis-11-tetradecenyl acetate (b) .

The invention relates to an attractant for the beet armyworm moth (Spodoptera exigua) , wholly or partially consisting of a mixture of at least two compounds selected from the group of

(a) cis-9-tetradecenyl acetate

(b) cis-11-tetradecenyl acetate

(c) cis-9, trans-12-tetradecadienyl acetate

(d) cis-9,cis-12-tetradecadienyl acetate, and

(e) tetradecyl acetate

with the exception of mixtures of compound (a) with compound (b) and of compound (a) with compound (c).

Field tests have shown that the mixtures according to the invention have an attracting activity which is about the same as that of female moths.

The invention also relates to a composition for attracting male beet armyworm moths consisting of one of the above-defined attractants in combination with a carrier. Suitable carrier materials are, for example, inert liquid or solid carriers, such as ethanol or methanol, or e.g. paper and other porous cellulose materials, rubber, and synthetic foams. Also, carriers may be plastics which are permeable to the molecules of the attractant components, for example polyethylene and/or water-swellable polymers or polymer mixtures. This kind of carriers can be used for the preparation of compositions in the form of capsules containing an amount of the attractant according to the invention, which attractant is released from the capsule to the surrounding area during an extended period of time. A similar effect may obtained by incorporating the attractants according to the invention in microcapsules.

0060589

The invention also relates to an insect trap provided with one of the above-defined attractant mixtures, optionally combined with a carrier to form a composition. Such insect traps are known per se, for example from J. Econ. Ent. 63, Nr. 2(1970) 370-373. Simple insect traps which can be handled easily consist of a plastic tube open at both ends and having a circular or polyangular, for example triangular cross-section, a diameter of about 10-25 cm and a length of about 2 to 3 times the diameter. A sticky glue may be applied to the bottom of the tube. The trap is provided with an amount of the attractant according to the invention, preferably in form of a polyethylene capsule filled with the attractant.

Finally, the invention relates to a process for controlling the beet armyworm moth, in which said moth is exposed to an attractant. According to the invention a mixture of at least two compounds selected from the group of the abovementioned compounds (a) to (e) inclusive, with the exception of mixtures of compound (a) with compound (b) and of compound (a) with compound (c), is used as the attractant.

This process may be carried out by placing insect traps containing one of the abovementioned mixtures in an area to be protected against the beet armyworm moth. Alternatively, the concentration of a mixture according to the invention in the air above the area to be protected may be made so high that the male moths will become confused and will be unable to find their female partners. This is effected by permeating the air in, around or over the area to be protected with a sufficient amount of a mixture according to the invention, preferably in the form of a composition releasing the attractant at a substantially constant rate during an extended period of time.

4 0060589

CLAIMS.

1. Attractant for the beet armyworm moth ( Spodoptera exigua ),
wholly or partially consisting of a mixture of at least two compounds
selected from the group of

(a) cis-9-tetradecenyl acetate

(b) cis-11-tetradecenyl acetate

(c) cis-9, trans-12-tetradecadienyl acetate

(d) cis-9, cis-12-tetradecadienyl acetate, and

(e) tetradecyl acetate,

with the exception of mixtures of compound (a) with compound (b) and
of compound (a) with compound (c).

2. Composition for attracting the male beet armyworm moth
consisting of an attractant according to claim 1, combined with a
carrier.

3. Insect trap provided with an attractant according to claim 1
or with a composition according to claim 2.

4. A process for controlling the beet armyworm moth
(Spodoptera exigua), in which said moth is exposed to an attractant,
characterized by using a mixture as defined in claim 1 or a composition
according to claim 2 as the attractant.

5. The process of claim 4, characterized in that the attractant
is used in an insect trap which is located in an area which is to
be protected against said moth.

6. The process according to claim 4, characterized by using
the attractant to permeate the air in, around or over an area
which is to be protected against said moth so that the attractant
concentration in said air will be such that the male moths will become
confused.

———

European Patent Office

EUROPEAN SEARCH REPORT

0060589

Application number

EP 82 20 0268

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | R.WEGLER "Chemie der Pflanzen-schutz und Schädlingsbekämpfungs-mittel", volume 6, 1981, pages 34-46; 63-65, Springer-Verlag, Berlin, Heidelberg, NEW YORK (US)<br><br>* pages 37-39, 41,45;63-65 * | 1-6 | A 01 N 37/02 |
| A,D | JOURNAL OF ECONOMIC ENTOMOLOGY, volume 69, nr. 3, 1976 College Park, MARYLAND (US) E.R. MITCHELL et al.: "Sex pheromones of Spodoptera exigua, S.eridania and S.frugiperda: Bioassay for field activity" pages 324-326 | 1-6 | |
| | | | **TECHNICAL FIELDS SEARCHED (Int. Cl. ³)** |
| T | JOURNAL OF ENVIRONMENTAL SCIENCES AND HEALTH, volume A16, nr. 2, 1981, Dekker NEW YORK (US) J.H.TUMLINSON et al.: "Sex pheromonecomponents of the beet armyworm, Spodoptera exigua" pages 189-200 | 1-6 | A 01 N |

The present search report has been drawn up for all claims

| Place of search | Date of completion of the search | Examiner |
|---|---|---|
| THE HAGUE | 16th June 1982 | DECORTE |